# EUROPÄISCHE PATENTANMELDUNG

(11) **EP 0 770 835 A2**
(43) Veröffentlichungstag der Anmeldung: **02.05.1997**
(21) Anmeldenummer: 96117278.0
(22) Anmeldetag: 28.10.1996
(51) Int. Cl.: F24J 2/34

(54) **Solarkollektor zur Warmwassergewinnung**

(30) Priorität: 26.10.1995 PT 10178895; 14.03.1996 DE 19610117
(71) Anmelder: Reichert, Ernst, Dipl.-Ing., 9400 Porto Santo (PT)
(72) Erfinder: Reichert, Ernst, Dipl.-Ing., 9400 Porto Santo (PT)
(74) Vertreter: Eder, Thomas, Dr.-Ing.

(57) **Zusammenfassung**

Die Erfindung betrifft einen Solarkollektor zur Warmwassergewinnung mit einem Behälter zur Aufnahme von zu erwärmendem Wasser, welcher von einem wärmedämmenden Mantel umgeben ist, wobei der wärmedämmende Mantel in einem Einstrahlungsbereich für das Sonnenlicht im wesentlichen transparent ausgebildet ist, wobei der wärmedämmende Mantel im Einstrahlungsbereich für das Sonnenlicht dampfdicht getrennt vom übrigen wärmedämmenden Mantel als im Wesentlichen in sich abgeschlossener Raum mit geringem Volumen ausgebildet ist.

## Beschreibung

Die Erfindung betrifft einen Solarkollektor mit den Merkmalen des Oberbegriffs des Patentanspruchs 1.

Durch Sonneneinstrahlung wird in einem rohrförmigen Speicherabsorber heißes Wasser erzeugt. Dieses Heißwasser wird über Nacht oder über einen Schlechtwettertag hinweg vor Abkühlung dadurch geschützt, dass das ganze System mit einer wärmedämmenden Wandung umgeben ist. Diese wärmedämmende Wandung - bestehend aus Glasscheibe mit darunterliegendem, transparentem, wärmedämmendem Medium und einer PU-Hartschaumisolierung im unteren Bereich - bildet einen in sich abgeschlossenen aber relativ großen isolierten Raum. Die isolierende Wandung ist bei kostengünstig herstellbaren Typen jedoch nicht dampfdicht ausgeführt (vor allem im Bereich der Glasscheibe), so dass abhängig von der Temperatur und der Feuchtigkeit der Luft im Behälter bzw. der Umgebung eine Kondensation im Behälter auftritt und die Innenseite der Glasscheibe beschlägt. Dies führt zu einer Verringerung des Wirkungsgrades des Kollektors. Diese Problematik tritt insbesondere in Küstenregionen mit hoher Luftfeuchtigkeit und entsprechenden Temperaturschwankungen zu Tage.

Der Erfindung liegt daher die Aufgabe zugrunde, einen Solarkollektor zu schaffen, bei dem bei gleichzeitig einfachem und kostengünstigem Aufbau die Kondensation weitgehend verhindert wird bzw. im Fall von Kondensation die Wirkungsgradreduzierung nur relativ gering ist.

Die Erfindung löst diese Aufgabe mit den Merkmalen des Patentanspruchs 1.

Durch das Vorsehen eines nur relativ geringen Volumens der isolierenden Hülle im Einstrahlbereich, das nicht dampfdicht gekapselt sein muss und daher kostengünstig herstellbar ist, kann sich allenfalls eine geringe Wassermenge an der Innenseite der transparenten äußeren Hülle, z.B. einer Glasplatte, niederschlagen. Der Niederschlag kann bei einer ausreichenden Belüftung des Volumens auch schnell wieder in Form von Wasserdampf abgegeben werden. Durch die dampfdichte Trennung dieses relativ geringen Volumens des Einstrahlbereichs vom übrigen isolierenden Mantel wird die maximal kondensierbare Wassermenge auf ein Minimum begrenzt.

Bei der bevorzugten Ausführungsform der Erfindung ist die in Richtung des Behälterinneren weisende Unterseite des Einstrahlungsbereichs durch eine Absorberplatte begrenzt. Hierdurch ergibt sich der Vorteil, dass auch das Volumen für das zu erwärmende Medium, z.B. Wasser, nicht dampfdicht ausgeführt sein muss, da eine Kondensation an der Innenseite der Absorberplatte - falls dies infolge der vollständigen Befüllung des Innenraums des Behälters mit dem zu erwärmenden Medium überhaupt möglich sein sollte - unerheblich ist.

Durch die Absorberplatte kann das Volumen des Einstrahlbereichs auch auf einfache Weise vom Volumen des übrigen isolierenden Mantels dampfdicht abgetrennt werden.

Nach der bevorzugten Ausführungsform der Erfindung ist im Raum zwischen der transparenten Platte des Einstrahlbereichs und der Absorberplatte ein transparentes wärmedämmendes Medium eingebracht, um die Isolierwirkung dieses Mantelbereichs zu verbessern.

Das Auflösen von kondensiertem Wasser an der Innenseite der transparenten Platte kann beschleunigt werden, wenn das Volumen des Einstrahlbereichs Öffnungen zur Zirkulation von Luft aufweist, z.B. an den Seitenwandungen des durch die transparente Platte und die Absorberplatte bestimmten Volumens. Diese Öffnungen können durch eine dampfdurchlässige Membran, z.B. Filzstoff, verschlossen sein.

Durch das Anordnen der Absorberplatte direkt unter dem Volumen des Einstrahlbereichs (bzw. durch die Begrenzung dieses Bereichs durch die Absorberplatte) kann sich jedoch der Nachteil einer Eisbildung innerhalb des Volumens für das zu erwärmende Medium ergeben, insbesondere dann, wenn auf ein wärmedämmendes transparentes Material im Einstrahlbereich verzichtet wird. Solche extrem kostengünstige Versionen sind auch in Regionen mit großen Temperaturschwankungen durchaus einsetzbar. Allerdings besteht dabei die Gefahr der Zerstörung des Kollektors infolge der Volumenausdehnung des wärmespeichernden Mediums.

In der bevorzugten Ausführungsform der Erfindung sind das Volumen des Behälters für das wärmespeichernde Medium und das Material der Behälterwandung und/oder deren Abmessungen daher so gewählt, dass die Volumenausdehnung im Gefrierfall zu einer ausschließlich elastischen Verformung der Behälterwandung führt.

Hierzu kann der Behälter in seiner Wandung Kanten aufweisen, die durch bei einer Volumenausdehnung des Mediums durch eine elastische Biegebeanspruchung eine Volumenausdehnung des Behälters ermöglichen. Anstelle von Kanten kann die Behälterwandung auch Krümmungen aufweisen, die bei Biegebeanspruchung eine Vergrößerung des Behältervolumens erlauben.

In einer anderen Ausführungsform der Erfindung kann auch ein Teil des Volumens des Behälters durch eine Begrenzungswandung abgetrennt und mit einer gefriersicheren Flüssigkeit gefüllt sein. Durch das Verbinden dieses Volumens mit einem Überlaufgefäß kann dann die Volumenausdehnung des gefrierenden Mediums durch die ausreichend verformbare Begrenzungswandung ausgeglichen werden, wobei ein entsprechendes Volumen der gefriersicheren Flüssigkeit in das Überlaufgefäß gedrückt wird.

Die spezielle Ausführung des Wasserbehälters zur Gewährleistung der Gefriersicherheit ist selbstverständlich unabhängig von der speziellen Ausbildung der Wärmedämmung und getrennt davon auch für beliebige andere Kollektoren anwendbar, weist jedoch in Verbindung mit der Erfindung die genannten Vorteile auf.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: einen Querschnitt durch einen Solarkollektor;
- Fig. 2: eine perspektivische Skizze des Wasserbehälters der Ausführungsform in Fig. 1 ohne Glasscheibe und ohne Isolierung;
- Fig. 3-5: mögliche Querschnitte des Wasserbehälters weiterer Ausführungsformen mit oben skizziertem Raum (I);
- Fig. 6: einen Querschnitt einer weiteren Ausführungsform eines erfindungsgemäßen Solarkollektors mit einem zusätzlichen Flüssigkeitsbehälter zur Aufnahme einer Flüssigkeit mit hoher Wärmespeichereigenschaft und die zugleich auch gefriersicher ist.

Die Kondensation wird dadurch verhindert, daß zur Wärmedämmung des Wasserbehälters (4) im Bereich der Absorberplatte (3) ein im wesentlichen abgeschlossener Raum (I) mit kleinem Volumen geschaffen wird. Aus der Luft in diesem kleinen Volumen kann daher auch nur wenig Wasser kondensieren. Werden die schmalen Stirnseiten mit einer dampfdurchlässigen Membran (7), z.B. mit Filzstoff, verschlossen, so entweicht evtl. über Nacht an der transparenten Platte (1), z.B. Isolierglas, kondensiertes Wasser bei Sonneneinstrahlung durch das Erwärmen der schwarz beschichteten Absorberplatte (3) als Dampf sehr schnell nach außen. Die Sonne kann dann von einem Kondensat ungehindert die Absorberplatte (3) erreichen. Zusätzlich kann noch ein hygroskopisches Mittel beigegeben werden, welches das Kondensat speichert und erst bei genügend starker Sonneneinstrahlung freigibt, so dass es als Dampf entweichen kann.

Der in sich abgeschlossene Raum (II) dient der Wärmedämmung des Wasserbehälters (4) im Bereich des unten angeordneten Stahlbleches (5) und hat die Größe, die eine übliche Isolierung (6), z.B. mittels Faserstoffen, einnimmt.

Die Räume (I) und (II) sind dampfdicht voneinander getrennt. Eine Kondensation im Raum (II) kann daher keinerlei negativen Einfluß ausüben.

In besonderer Ausgestaltung des erfindungsgemäßen Verfahrens kann die Absorberplatte (3) eine größere Materialdicke aufweisen als der restliche Teil des Wasserbehälters (4). Das Stahlvolumen der Absorberplatte (3) wirkt dann zusätzlich zu dem im Wasserbehälter (4) enthaltenen Wasser als Wärmespeicher.

In einer weiteren Ausführung des erfindungsgemäßen Solarkollektors wird das Volumen des Wasserbehälters (4) minimiert. Der Solarkollektor schrumpft dann zu einem Durchlauferhitzer. Das so gewonnene heiße Wasser kann dann mittels einer Umwälzpumpe zu einem separaten, wärmeisolierten Speicher gepumpt werden. Bei einer solchen Ausführung hat der Kollektor auf dem Dach nur ein geringes Gewicht, was für bewegliche Kollektoren wichtig ist, die den jeweiligen Sonnenständen angepasst werden sollen.

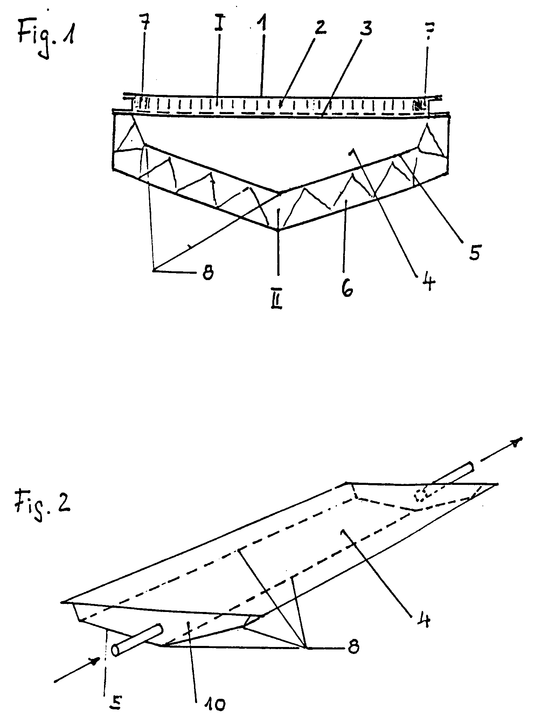

In vorteilhafter Ausführung des erfindungsgemäßen Solarkollektors hat das Stahlblech (5), das ansonsten beliebig gestaltet werden kann, eine besondere Form. Dies ist in den Fig. 1 bis 6 deutlich skizziert. Das z.B. seitlich und in der Mitte gekantete Blech (5) bekommt durch die Kantung (8) eine Eigenstabilität. Der Wasserbehälter (4) lässt sich somit sehr kostengünstig fertigen. Entscheidend ist aber ein weiterer Effekt: In Gebirgslagen kann bei großer Kälte und tagelanger Bewölkung das Wasser im Wasserbehälter (4) gefrieren. Die durch die Kantung (8) des Bleches (5) gewonnenen Ebenen können durch den Druck des Eises bis zu einem gewissen Grade ausbeulen und die Kantenwinkel sich leicht weiter öffnen, ohne dass große Materialspannungen entstehen. Anders gesagt: Der gekantete Umfang des Stahlbleches (5) in den Beispielen gemäß Fig. 1 bis 4 und 6 bzw. die Sonderform gemäß Fig. 5 schafft ein Wasservolumen das kleiner ist, als es sich unter hohem Druck automatisch einstellen würde.

Ein derart konstruierter Wasserbehälter (4) ist immer frostsicher. Da die bei jedem Gefrierfall auftretenden Spannungen im elastischen Bereich bleiben, nimmt das Stahlblech (5) hinterher seine ursprüngliche Form jeweils wieder ein bzw. ist das Stahlblech (5) durch von außen wirkende Kräfte sehr leicht wieder in seine ursprüngliche Lage zurückzuführen. Solche Kräfte können z.B. Stahlfedern ausüben, die an einem äußeren Rahmen so angeordnet sind, dass sie sich beim Gefrierfall automatisch spannen.

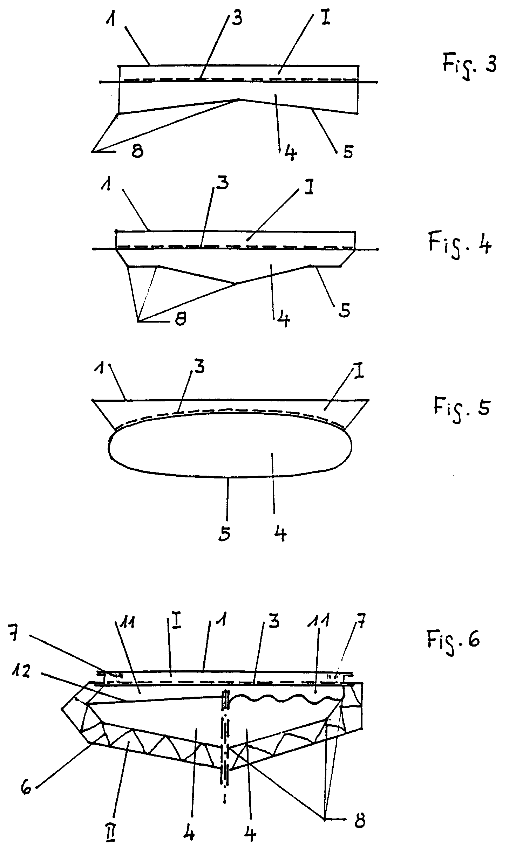

Eine besondere Ausführungsform des Solarkollektors ist in Fig. 6 im Querschnitt dargestellt. Die linke und rechte Hälfte dieses Querschnitts zeigt als Beispiel je eine andere mögliche Variante.

Diese Ausführungsform beinhaltet einen zusätzlichen, vom Wasserbehälter (4) getrennt angeordneten Flüssigkeitsbehälter (11) zur Aufnahme einer Flüssigkeit, die sowohl gefriersicher ist als auch hohe Wärmespeichereigenschaften hat. Dieser Flüssigkeitsbehälter (11) ist oben durch die Absorberplatte (3) und unten durch das Stahlblech (12) begrenzt. Darunter schließt der Wasserbehälter (4) an, der durch die Stahlbleche (5) und (12) begrenzt ist. Das Stahlblech (12) hat die Funktion eines Wärmetauschers.

Um die Qualität des Wärmetauschers zu verbessern, kann die Oberfläche des Stahlbleches (12) vergrößert werden, indem das Stahlblech (12) einen gewellten, gezackten oder gerippten Querschnitt aufweist. Derartige Querschnitte lassen sich durch Eisdruck auch sehr leicht im elastischen Bereich verformen, so dass der Solarkollektor bei einem Gefrierfall keinen Schaden nehmen kann.

Damit aber bei Eisdruck eine Verformung des Stahlbleches (12) in Richtung des Flüssigkeitsbehälters (11) überhaupt möglich wird, muss ein entsprechender Teil der Flüssigkeit des Flüssigkeitsbehälters (11) über ein höher gelegenes kommunizierendes Ausgleichsgefäß oder über ein Druckventil (jeweils nicht dargestellt) ausweichen können.

Wird z.B. ein Druckventil entsprechend dem Wasserdruck im Wasserbehälter (4) eingestellt, und trifft man Vorkehrungen, dass sich das Stahlblech (12) beim ersten Füllen von Wasserbehälter (4) und Flüssigkeitsbehälter (11) nicht verformt, bleibt das Stahlblech (12) für den Normalfall immer biege- und zugspannungsfrei.

Das gesamte elastische Verformungspotential bleibt für den Gefrierfall reserviert.

Damit das Stahlblech (12) nach dem Gefrierfall wieder seine ursprüngliche Lage einnimmt, ist es erforderlich, exakt dieselbe Menge an Flüssigkeit wieder zurückzupumpen, die beim Gefrierfall aus dem Flüssigkeitsbehälter (11) ausgetreten ist.

Selbstverständlich kann das Volumen (4) an beliebiger Stelle im Behälterinneren vorgesehen sein, z.B. auch zwischen der Oberseite der unteren Innenwandung des Behälters und dem dann darüber angeordneten zu erwärmenden Medium.

Die Merkmale der vorstehend beschriebenen Ausführungsformen der Erfindung sind selbstverständlich auch in geeigneten Kombinationen einsetzbar. Die spezielle Ausbildung des Solarkollektors im Hinblick auf eine höhere Wärmespeicherung, wie die Wahl einer Absorberplatte mit größerer Materialdicke oder die Anordnung eines zusätzlichen Flüssigkeitsbehälters zur Aufnahme einer Flüssigkeit mit hoher Wärmespeichereigenschaft, sind auch für sich genommen, d.h. unabhängig von den Merkmalen des Anspruchs 1, einsetzbar.

## Patentansprüche

1. Solarkollektor zur Warmwassergewinnung mit einem Behälter zur Aufnahme von zu erwärmendem Wasser, welcher von einem wärmedämmenden Mantel umgeben ist, wobei der wärmedämmende Mantel in einem Einstrahlungsbereich für das Sonnenlicht im wesentlichen transparent ausgebildet ist, **dadurch gekennzeichnet,** dass der wärmedämmende Mantel im Einstrahlungsbereich für das Sonnenlicht dampfdicht getrennt vom übrigen wärmedämmenden Mantel als im wesentlichen in sich abgeschlossener Raum mit geringem Volumen ausgebildet ist.

2. Solarkollektor nach Anspruch 1, **dadurch gekennzeichnet,** dass der Solarkollektor als Durchlauferhitzer ausgebildet ist.

3. Solarkollektor nach Anspruch 1, **dadurch gekennzeichnet,** dass der Solarkollektor als Speicherkollektor ausgebildet ist.

4. Solarkollektor nach einem der vorhergehenden Ansprüche, **dadurch gekennzeichnet,** dass der Wasser- oder Flüssigkeitsbehälter im Einstrahlungsbereich für das Sonnenlicht von einer Absorberplatte begrenzt oder mit dieser verbunden ist, und dass in einem vorbestimmten Abstand über der Absorberplatte eine transparente Platte zur Bildung des als wärmedämmenden Mantels dienenden abgeschlossenen Raumes vorgesehen ist.

5. Solarkollektor nach Anspruch 4, **dadurch gekennzeichnet,** dass der in sich abgeschlossene Raum durch die Absoberplatte dampfdicht vom übrigen wärmedämmenden Mantel getrennt ist.

6. Solarkollektor nach Anspruch 4 oder 5, **dadurch gekennzeichnet,** dass im Raum zwischen der transparenten Platte und der Absorberplatte ein transparentes wärmedämmendes Medium eingebracht ist.

7. Sollarkollektor nach einem der Ansprüche 4 bis 6, **dadurch gekennzeichnet,** dass seitliche Wandungen des abgeschlossenen Raumes zwischen der transparenten Platte und der Absorberplatte als dampfdurchlässige Membran, beispielsweise Filzstoff, ausgebildet sind.

8. Solarkollektor nach einem der Ansprüche 4 bis 7, **dadurch gekennzeichnet,** dass die Absorberplatte dicker ausgebildet ist als die übrige Wandung des Wasser- oder Flüssigkeitsbehälters.

9. Solarkollektor nach einem der vorhergehenden Ansprüche, **dadurch gekennzeichnet,** dass das Volumen des Wasserbehälters und das Material der Wasserbehälterwandung und/oder deren Abmessungen so gewählt sind, dass die Volumenausdehnung, welche sich bei einem Gefrieren des Wassers ergibt, zu einer ausschließlich elastischen Verformung der Wasserbehälterwandung führt.

10. Solarkollektor nach Anspruch 9, **dadurch gekennzeichnet,** dass die Wandung des Wasserbehälters Kanten aufweist, welche bei auf die Behälterinnenwandung wirkendem Druck einer Biegebeanspruchung derart unterworfen werden, dass sich im Wesentlichen ausschließlich durch Biegungen im Bereich der Kanten eine Vergrößerung des Behältervolumens ergibt.

11. Solarkollektor nach Anspruch 10, **dadurch gekennzeichnet,** dass der Wasserbehälterquerschnitt einen Bereich von wenigstens vier im Wesentlichen parallel verlaufenden Kanten aufweist.

12. Solarkollektor nach einem der vorhergehenden Ansprüche, **dadurch gekennzeichnet,** dass im Wasserbehälter oder angrenzend an diesen ein Flüssigkeitsbehälter mit verformbarer Begrenzungswandung angeordnet ist.

13. Solarkollektor nach Anspruch 12, **dadurch gekennzeichnet,** dass der Flüssigkeitsbehälter zwischen einer unter dem Einstrahlbereich vorgesehenen Absorberplatte und dem Wasservolumen des Wasserbehälters vorgesehen ist, wobei die Behälter eine gemeinsame Wandung besitzen, die als Wärmetauscher dient.

14. Solarkollektor nach Anspruch 12 und 13, **dadurch gekennzeichnet,** dass die gemeinsame Wandung gewellt, gezackt oder gerippt ausgebildet ist.
